# EUROPEAN PATENT SPECIFICATION

(11) **EP 2 732 728 B1**
(45) Date of publication and mention of the grant of the patent: **12.02.2020**
(21) Application number: 13158276.9
(22) Date of filing: 08.03.2013
(51) Int. Cl.: A47C 31/02, B60N 2/58

(54) **BENDABLE FASTENING ASSEMBLY AND CUSHION FORMED WITH THE SAME**
BIEGBARE BEFESTIGUNGSANORDNUNG UND DAMIT HERGESTELLTES KISSEN
ENSEMBLE DE FIXATION PLIABLE ET COUSSIN FORMÉ AVEC CELUI-CI

(30) Priority: 19.11.2012 TW 101143042
(43) Date of publication of application: 21.05.2014
(73) Proprietor: Taiwan Paiho Limited, Chang Hua Hsien (TW)
(72) Inventor: Cheng, Allen, Chang Hua Hsien (TW)
(74) Representative: Lang, Christian

(56) References cited:
- WO-A2-01/89338
- GB-A- 2 468 869
- JP-A- H03 146 003
- US-A1- 2011 167 598

## Description

### BACKGROUND OF THE INVENTION

### 1. Field of the Invention

The present invention is related to a fastening assembly, and more particularly to a fastening assembly to be molded with a foam material.

### 2. Description of the Prior Art

It is well known that a conventional fastening strip was invented by a Swiss engineer George de Mestral in accordance with the idea of burrs. The fastening strip is generally configured to connect a component with tiny hooks and another component with hair loops together. When the hooks and loops are pressed together, the two pieces fasten or bind together.

The fastening strip is easy to assemble and detach. In recent years, the fastening strip is usually applied to operate in coordination with other components. When the fastening strip is used with a foam component, such as a cushion or chair cushion, the hook of the fastening strip is configured to face outside. The fastening strip is combined with the chair cushion for connecting to another component with a corresponding hair loop. The manufacturing method of the fastening strip and the chair cushion is to put the fastening strip in a predetermined position of a mold, and a foam material is filled therein. After the foam material is solidified, the fastening strip and the chair cushion are formed together.

However, the hook-side fastening strip used in the chair cushion is a hard and straight strip, which is not bendable. Consequently, the strip formed on the foam object can only be the hard and straight strip, such as the hard and straight strip on the chair cushion. Therefore, when desiring to form bendable strips on the foam object, a fastening strip must in advance be cut into several small pieces and then all of the small pieces of the fastening strip are in turn connected together to form a fastening strip set, which is arranged in a bendable shape. This kind of method requires many times of working procedures and wastes time as well as increases manufacturing cost.

Document US 2011/167 598 A1 discloses a fastening strap assembly and a foam article including the same, wherein a magnetic material layer is disposed upon the hooks for covering the hooks. Document GB 2 468 869 A discloses a bendable fastening assembly according to the preamble of claim 1, and in particular an assembly including a plurality of fastening units that are individually provided as separated strips, which are joined by means of a thin body forming a bendable region between two adjacent fastening units, wherein each free end of the fastening units is provided with engaging cut-outs, and wherein the thin body is provided with securing leg portions extending therefrom and configured to cooperate with the engaging cut-outs on the fastening units for serially connecting the fastening units, a part of the thin body extending from the bottom surface of the fastening unit.

### SUMMARY OF THE INVENTION

In order to solve the problems described above, one main object of the present invention is to provide a fastening assembly to be embedded in a foam material. By using a bendable thin body to connect isolated fastening units, a bendable fastening assembly can be formed in one procedure and the bendable fastening assembly can be bended and shaped to have any desired curvature.

According to objects above, a bendable fastening assembly according to claim 1 is disclosed in the present invention and includes a plurality of fastening units, each of the fastening units including: a strip including a top surface and a bottom surface being opposite to the top surface; a plurality of hooks disposed on the top surface of the strip and distant from an edge of the top surface with an interval, where an area within the interval forming an isolated area; a magnetic component disposed on the bottom surface of the strip; and a bendable thin body being bendable and being made of metal and shape-fixed after bending, the bendable thin body being partially disposed on the magnetic component and serially connecting the fastening units; wherein a gap exists between the neighboring fastening units to provide a bendable range for the bendable thin body, and the shape of the bendable fastening assembly is fixed by bending the bendable thin body. The bendable thin body partially disposed on the magnetic component of the strip is furthermore covered by a covering layer.

Another object of the present invention is to provide a cushion formed with a fastening assembly. By using a bendable thin body to connect isolated fastening units, a bendable fastening assembly can be formed in one procedure and the bendable fastening assembly can be bended and shaped to have any desired curvature.

According to objects above, a cushion formed with a bendable fastening assembly includes a foam material chair body and at least one bendable fastening assembly, the foam material chair body and the at least one bendable fastening assembly being integrally formed, and the bendable fastening assembly includes a plurality of bendable fastening units and a bendable thin body. Each of the bendable fastening units includes: a strip including a top surface and a bottom surface being opposite to the top surface; a plurality of hooks disposed on the top surface of the strip and distant from an edge of the top surface with an interval, where an area within the interval forming an isolated area; a magnetic component disposed on the bottom surface of the strip; and a bendable thin body being bendable and being made of metal and shape-fixed after bending, the bendable thin body being partially disposed on the magnetic component and serially connecting the fastening units; wherein a gap exists between the neighboring fastening units to provide a bendable range for the bendable thin body, and the shape of the bendable fastening assembly is fixed by bending the bendable thin body, wherein the foam material chair body further includes at least one curved concave for disposing the bendable fastening assembly.

By virtue of the bendable fastening assembly disclosed in the present invention, it is easy to form a chair cushion with bendable fastening assembly. The manufacturing time is saved and the manufacturing cost is reduced.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein:
FIG. 1 is a plan view illustrating a bendable fastening assembly according to a first embodiment of the present invention;
FIG. 2A is a sectional view illustrating one fastening unit of the bendable fastening assembly according to the first embodiment of the present invention;
FIG. 2B is a sectional view illustrating one fastening unit of the bendable fastening assembly according to a second embodiment of the present invention;
FIG. 3A is a view illustrating that the bendable fastening assembly in the first embodiment of the present invention is disposed on a mold prepared for foam material molding;
FIG. 3B is a view illustrating that the bendable fastening assembly in the second embodiment of the present invention is disposed on a mold prepared for foam material molding;
FIG. 4 is a view illustrating that the bendable fastening assembly in the present invention is embedded within a chair cushion; and
FIG. 5 is a view illustrating the bendable fastening assembly in the present invention is bent within the curved concave of the chair cushion.

### DESCRIPTION OF THE PREFERRED EMBODIMENT

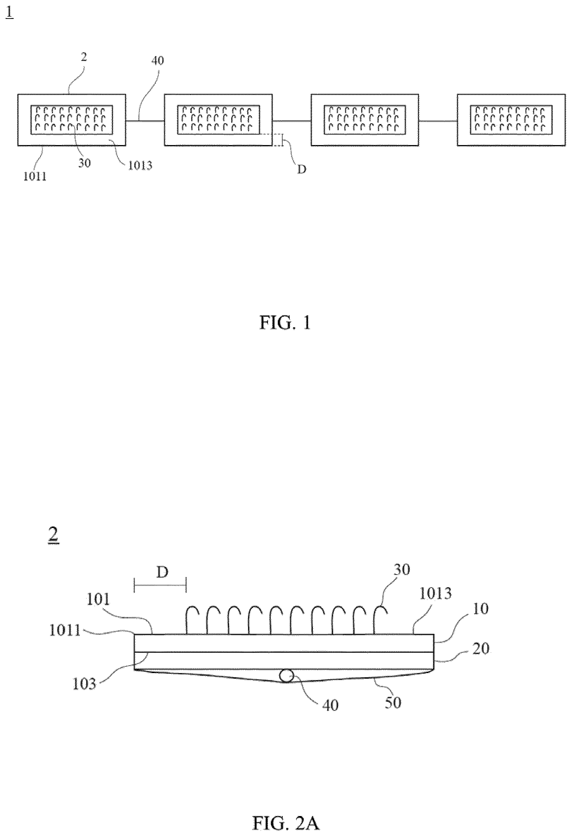

Please refer to FIG. 1, which is a plan view illustrating a bendable fastening assembly according to a first embodiment of the present invention. As shown in FIG. 1, the bendable fastening assembly 1 is formed by a plurality of fastening units 2. The fastening units 2 are connected to each other by a bendable thin body 40. The shape of the bendable thin body is thin and long and the sectional thereof is preferred to be a circle. The material of the bendable thin body 40 is a metal, such as iron. Any metals which are bendable to have a particular fixed shape can be the material of the bendable thin body 40.

Now, please refer to FIG. 1 and FIG. 2A in conjunction, each of the fastening units 2 of the bendable fastening assembly 1 in the first embodiment of the present invention includes a strip 10, a plurality of hooks 30, and a magnetic component 20. The strip 10 includes a top surface 101 and a bottom surface 103 being opposite to the top surface 101. The material of the strip 10 can be non-woven fiber, fiber or plastic. The hooks 30 are disposed on the top surface 101 of the strip 10. The disposing region of the hooks 30 on the top surface 101 are distant from the edge 1011 of the top surface 101 with an interval D and the surrounding area within the interval D forms an isolated area 1013. The magnetic component 20 is disposed on the bottom surface 103 of the strip 20. The material of the magnetic component 20 is iron powder or iron alloy powder. In addition, in the first embodiment of the present invention, the bendable thin body 40 is partially disposed on the magnetic component 20, which is disposed on the bottom surface 103 of the strip 10. The magnetic component 20 is covered by a covering layer 50, which has the same size as the strip 10 and the covering layer 50 is extended out of the strip 10 along the longitudinal direction of the strip 10. In other words, the fastening units 2 in the present embodiment are serially connected by the bendable thin body 40 on the bottom surface 103 of each of the fastening units 2. A gap is existed between neighboring fastening units 2 and the gap is configured to avoid the fastening units 2 from hitting each other within a predetermined bending range of the bendable thin body 40.

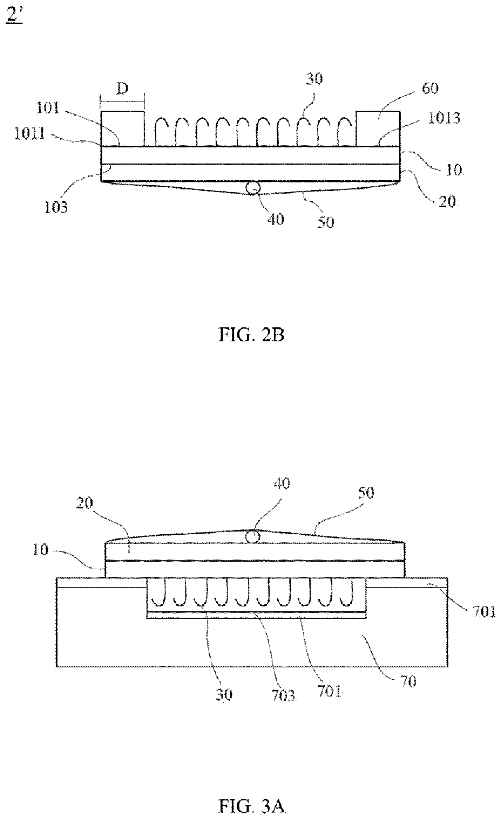

Furthermore, please refer to FIG. 1 and FIG. 2B in conjunction, which is a sectional view illustrating one fastening unit of the bendable fastening assembly according to a second embodiment of the present invention. In the second embodiment, the bendable fastening assembly 1 is made by a plurality of fastening units 2'. The structure for each of the fastening units 2' is the same as that for each of the fastening units 2 in the first embodiment and includes a strip 10, a plurality of hooks 30, a magnetic component 20, a bendable thin body 40 and a covering layer 50. The differences are that a retaining wall 60 is further disposed on the isolated area 1013 of the top surface 101 of the strip 10 and the height of the retaining wall 60 is larger than the height of the hook 30 on the top surface 101. The detail description of each of the components in the second embodiment is the same as that in the first embodiment and is omitted here.

Please refer to FIG. 3A, which is a view illustrating the bendable fastening assembly 1 in the first embodiment of the present invention is disposed on a mold prepared for foam material molding. The bendable fastening assembly 1 in the first embodiment of the present invention is to be embedded within a foam material (not shown) and to be exposed to provide the hooks 30 for fastening. Therefore, during the molding process of the bendable fastening assembly 1 and the foam material, it is required that the bendable fastening assembly 1 is in a fixed shape and the foam material is filled into the mold. Please refer to FIG. 2A and FIG. 3A in conjunction, when the bendable fastening assembly 1 and the foam material are embedded together, the top surface 101 in each of the fastening units 2 is reversed and disposed on the foam mold 70, and the top surface 101 of the fastening unit 2 faces the surface of the mold concave 703 of the foam mold 70. The hooks 30 of the fastening units 2 of the bendable fastening assembly in the first embodiment of the present invention is disposed on the top surface 101 of the strip 10 and includes a height, so the depth of the mold concave 703 of the foam mold 70 must be larger than the height of the hooks 30 so as to receive the hooks 30 of the fastening units 2 without touching and therefore damaging the hooks 30. The isolated area 1013 surrounding the hooks 30 is disposed on the outside surfaces of the foam mold 70. The magnetic layers 701 are respectively disposed on the bottom of the mold concave 703 and outside surfaces of the foam mold 70 and the magnetic layers 701 generate a magnetic absorbing action with the magnetic material 20 on the fastening unit to hold the reversed fastening unit 2 tightly. During the foaming procedure, the foam material shelters the exposed strip 10 and the surrounding area of the magnetic material 20 and covers the bendable thin body 40 located between the fastening units 2. Meanwhile, the hooks 30 within the mold concave 703 will not be affected by the foam material. When the foaming procedure is done, the fastening units 2 will be embedded in the foam material tightly because the edge of the strip 10 are filled with the foam material and the bendable thin body 40 are covered by the foam material.

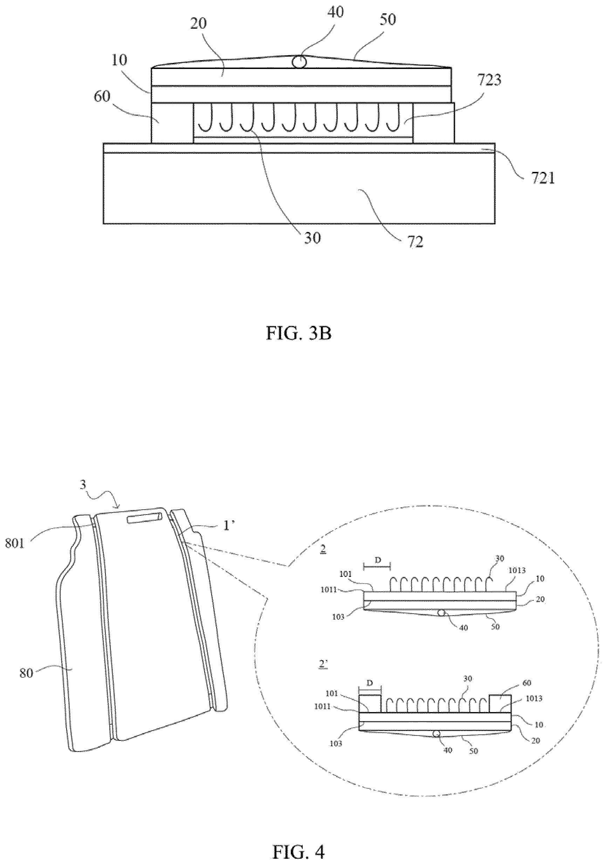

Now please refer to FIG. 3B, which is a view illustrating the bendable fastening assembly 1 in the second embodiment of the present invention is disposed on a mold prepared for foam material molding. According to the second embodiment of the present invention, the isolated area 1013 of the top surface 101 in the fastening unit 2' of the bendable fastening assembly 1 includes a retaining wall 60, so the molding with the foam mold 72 is formed is performed without the mold concave 703 as shown in FIG. 3A. Please refer to FIG. 2B and FIG. 3B in conjunction, the top surface 101 in each of the fastening units 2' is reversed and disposed on the foam mold 72. Because the height of the retaining wall 60 is larger than the height of the hooks 30, a protecting area 723 is formed in an area surrounded by the retaining wall 60 to protect the hooks 30 from damaging. A magnetic layer 721 is disposed on the foam mold 72, the magnetic layer 721 generate a magnetic absorbing action with the magnetic material 20 on the fastening unit 2' to hold the reversed fastening unit 2' tightly. During the foaming procedure, the foam material shelters the exposed strip 10 and the surrounding area of the magnetic material 20 and covers the bendable thin body 40 located between the fastening units 2'. Meanwhile, the hooks 30 within the protective area 723 will not be affected by the foam material. When the foaming procedure is done, the fastening units 2' will be embedded in the foam material tightly because the edge of the strip 10 are filled with the foam material and the bendable thin body 40 are covered by the foam material.

Please refer to FIG. 4, which is a view illustrating the bendable fastening assembly in the present invention is embedded within a chair cushion. As shown in FIG. 4, the chair cushion 3 includes a foam material chair body 80 and at least one bendable fastening assembly 1'. The foam material chair body 80 and the bendable fastening assembly 1' are formed integrally by foam material molding. The bendable fastening assembly 1' is the same as the bendable fastening assembly 1 in the previous embodiments and the detail description thereof is omitted herein. For example, each of the fastening units 2 of the bendable fastening assembly 1 in the first embodiment or each of the fastening units 2' of the bendable fastening assembly 1 in the second embodiment is embedded in the foam material chair body 80 and the foam material chair body 80 fills the edges of the strip 10 and the surroundings of the magnetic component 20 and covers the bendable thin body 40..

Moreover, the foam material chair body 80 includes at least one curved concave 801 for disposing the bendable fastening assembly 1 in the first embodiment or the second embodiment of the present invention to facilitate the assembling of the chair cushion 3 with any other objects with corresponding fastening structure. The objects with corresponding fastening structure can be a chair cushion leather cover or the chair body with loops.

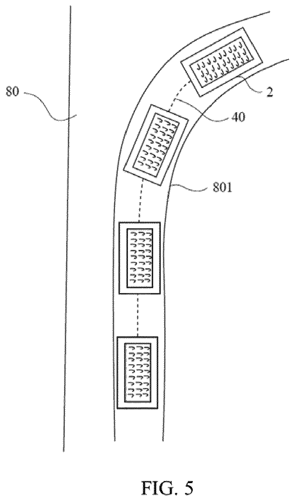

Now please refer to FIG. 5, which is a view illustrating the bendable fastening assembly in the present invention is bent within the curved concave 801 of the chair cushion 3. As shown in FIG. 5, the bendable fastening assembly 1 can be fastened within the curved concave 801. During the molding procedure of the foam material chair body 80, the bendable fastening assembly 40 is pre-bent according to the bending property of the bendable fastening assembly 40, the disposing direction for each of the fastening units 2 can be adjusted to fix within the curved concave. The bendable fastening assembly 40 can be fixed into a shape after bending. Because the bendable fastening assembly has a bendable and shape-fixable property, the bending position of the bendable fastening assembly will not be changed in a different direction when the bendable fastening assembly is already bent so as to avoid warp at the bending position of the bendable fastening assembly 1 and further avoid incomplete forming of the foam material chair body 80. After the foam material chair body 80 is formed, the surroundings of the strip 10 and the bendable thin body 40 will be stably embedded within the foam material chair body 80.

By the bendable fastening assembly provided in the present invention, the chair cushion 3 having curved concave 801 provided with fastening assembly can be easily made in one manufacturing procedure. The manufacturing time is saved and cost is reduced.

Although specific embodiments have been illustrated and described, it will be appreciated by those skilled in the art that various modifications may be made without departing from the scope of the present invention, which is intended to be limited solely by the appended claims.

## Claims

1. A bendable fastening assembly (1), comprising:
a plurality of fastening units (2), each of the fastening units (2) comprising:
a strip (10) including a top surface (101) and a bottom surface (103) being opposite to the top surface (101);
a plurality of hooks (30) disposed on the top surface (101) of the strip (10) and distant from an edge (1011) of the top surface (101) with an interval (D), where an area within the interval (D) forming an isolated area (1013);
a magnetic component (20) disposed on the bottom surface (103) of the strip(10); and
a bendable thin body (40) being bendable and being made of metal and shape-fixed after bending, the bendable thin body (40) being partially disposed on the magnetic component (20) and serially connecting the fastening units (2),
wherein a gap exists between the neighboring fastening units (2) to provide a bendable range for the bendable thin body (40); and the shape of the bendable fastening assembly (1) is fixed by bending the bendable thin body (40), **characterised in that** the bendable thin body (40) partially disposed on the magnetic component (20) of the strip (10) is covered by a covering layer (50).

2. The bendable fastening assembly (1) of claim 1, wherein a retaining wall (60) is disposed on the isolated area (1013) of the top surface (101) of the strip (10) and the retaining wall (60) has a height larger than a height of the hooks (30).

3. The bendable fastening assembly (1) of claim 1, wherein the magnetic component (20) is in a form of powder.

4. The bendable fastening assembly (1) of claim 3, wherein the magnetic component (20) is iron powder.

5. The bendable fastening assembly (1) of claim 3, wherein the magnetic component (20) is iron alloy powder.

6. The bendable fastening assembly (1) of claim 1, wherein the strip (10) is made of non-woven fabric.

7. The bendable fastening assembly (1) of claim 1, wherein the strip (10) is made of fiber cloth.

8. The bendable fastening assembly (1) of claim 1, wherein a material of the strip (10) is plastic.

9. A cushion (3) formed with a bendable fastening assembly (1), the cushion (3) comprising a foam material chair body (80) and at least one bendable fastening assembly (1), the foam material chair body (80) and the at least one bendable fastening assembly (1) being integrally formed, the cushion (3) is **characterized in that** the at least one bendable fastening assembly (1) is one selected from the group consisting of the bendable fastening assembly (1) according to claims 1 to 8, wherein the foam material chair body (80) includes at least one curved concave (801) for disposing the bendable fastening assembly (1).

10. The cushion (3) of claim 9, wherein the foam material chair body (80) covers the bendable thin body (40) located between the fastening units (2).

## Patentansprüche

1. Biegbare Befestigungsanordnung (1), umfassend:
eine Vielzahl an Befestigungseinheiten (2), wobei jede der Befestigungseinheiten (2) umfasst:
einen Streifen (10), der eine Oberseite (101) und eine Unterseite (103) beinhaltet,
die entgegengesetzt zu der Oberseite (101) ist,
eine Vielzahl an Haken (30), die an der Oberseite (101) des Streifens (10) angeordnet sind und in einem Abstand (D) von einem Rand (1011) der Oberseite (101) entfernt sind, wobei eine Fläche innerhalb des Abstandes (D) eine isolierte Fläche (1013) ausbildet,
eine magnetische Komponente (20), die an der Unterseite (103) des Streifens (10) angeordnet ist, und
einen biegbaren dünnen Körper (40), der biegbar ist und aus Metall hergestellt ist und nach dem Biegen in seiner Form fixiert ist, wobei der biegbare dünne Körper (40) partiell an der magnetischen Komponente (20) angeordnet ist und seriell die Befestigungseinheiten (2) verbindet,
wobei eine Lücke zwischen den benachbarten Befestigungseinheiten (2) existiert, um einen biegbaren Bereich für den biegbaren dünnen Körper (40) bereitzustellen, und wobei die Form der biegbaren Befestigungsanordnung (1) durch das Biegen des biegbaren dünnen Körpers (40) festgelegt wird, **dadurch gekennzeichnet, dass**
der biegbare dünne Körper (40), der partiell an der magnetischen Komponente (20) des Streifens (10) angeordnet ist, durch eine Deckschicht (50) abgedeckt ist.

2. Biegbare Befestigungsanordnung (1) gemäß Anspruch 1, bei der eine Rückhaltewand (60) an der isolierten Fläche (1013) der Oberseite (101) des Streifens (10) angeordnet ist und die Rückhaltewand (60) eine Höhe aufweist, die größer als eine Höhe der Haken (30) ist.

3. Biegbare Befestigungsanordnung (1) gemäß Anspruch 1, bei der die magnetische Komponente (20) in Form eines Pulvers vorliegt.

4. Biegbare Befestigungsanordnung (1) gemäß Anspruch 3, bei der die magnetische Komponente (20) Eisenpulver ist.

5. Biegbare Befestigungsanordnung (1) gemäß Anspruch 3, bei der die magnetische Komponente (20) Eisenlegierungspulver ist.

6. Biegbare Befestigungsanordnung (1) gemäß Anspruch 1, bei der der Streifen (10) aus einem nicht gewebten Textil hergestellt ist.

7. Biegbare Befestigungsanordnung (1) gemäß Anspruch 1, bei der der Streifen (10) aus Faserstoff hergestellt ist.

8. Biegbare Befestigungsanordnung (1) gemäß Anspruch 1, bei der ein Material des Streifens (10) Plastik ist.

9. Kissen (3), das mit einer biegbaren Befestigungsanordnung (1) ausgebildet ist, wobei das Kissen (3) einen Stuhlkörper aus einem Schaummaterial (80) und zumindest eine biegbare Befestigungsanordnung (1) umfasst, wobei der Stuhlkörper aus Schaummaterial (80) und die zumindest eine biegbare Befestigungsanordnung (1) einstückig ausgebildet sind, wobei das Kissen (3) **dadurch gekennzeichnet ist, dass** die zumindest eine biegbare Befestigungsanordnung (1) eine ist, die aus der Gruppe ausgewählt ist, die aus den biegbaren Befestigungsanordnungen (1) gemäß Ansprüchen 1 bis 8 besteht, wobei der Stuhlkörper aus Schaummaterial (80) zumindest eine gebogene Höhlung (801) umfasst, um die biegbare Befestigungsanordnung (1) anzuordnen.

10. Kissen (3) gemäß Anspruch 9, bei dem der Stuhlkörper aus Schaummaterial (80) den biegbaren dünnen Körper (40) abdeckt, der zwischen den Befestigungseinheiten (2) angeordnet ist.

## Revendications

1. Ensemble de fixation flexible (1), comprenant:
une pluralité d'unités de fixation (2), chacune des unités de fixation (2) comprenant:
une bande (10) comportant une surface supérieure (101) et une surface inférieure (103) opposée à la surface supérieure (101);
une pluralité de crochets (30) disposés sur la surface supérieure (101) de la bande (10) et distants d'un bord (1011) de la surface supérieure (101) avec un intervalle (D), où une zone dans l'intervalle (D) forme une zone isolée (1013);
un composant magnétique (20) disposé sur la surface inférieure (103) de la bande (10); et
un corps mince flexible (40) pouvant être fléchi et étant composé de métal et de forme fixe après fléchissement, le corps mince flexible (40) étant en partie disposé sur le composant magnétique (20) et connectant en série les unités de fixation (2),
dans lequel un espace existe entre les unités de fixation (2) voisines pour fournir une plage flexible pour le corps mince flexible (40); et la forme de l'ensemble de fixation flexible (1) est fixée par fléchissement du corps mince flexible (40), **caractérisé en ce que**
le corps mince flexible (40) disposé en partie sur le composant magnétique (20) de la bande (10) est couvert par une couche de recouvrement (50).

2. Ensemble de fixation flexible (1) selon la revendication 1, dans lequel une paroi de retenue (60) est disposée sur la zone isolée (1013) de la surface supérieure (101) de la bande (10) et la paroi de retenue (60) présente une hauteur supérieure à une hauteur des crochets (30).

3. Ensemble de fixation flexible (1) selon la revendication 1, dans lequel le composant magnétique (20) est en forme de poudre.

4. Ensemble de fixation flexible (1) selon la revendication 3, dans lequel le composant magnétique (20) est de la poudre de fer.

5. Ensemble de fixation flexible (1) selon la revendication 3, dans lequel le composant magnétique (20) est de la poudre d'alliage de fer.

6. Ensemble de fixation flexible (1) selon la revendication 1, dans lequel la bande (10) est composée de tissu non tissé.

7. Ensemble de fixation flexible (1) selon la revendication 1, dans lequel la bande (10) est composée de tissu fibreux.

8. Ensemble de fixation flexible (1) selon la revendication 1, dans lequel un matériau de la bande (10) est du plastique.

9. Coussin (3) formé avec un ensemble de fixation flexible (1), le coussin (3) comprenant un corps de chaise de matériau en mousse (80) et au moins un ensemble de fixation flexible (1), le corps de chaise de matériau en mousse (80) et l'au moins un ensemble de fixation flexible (1) étant formés d'une seule pièce, le coussin (3) est **caractérisé en ce que** l'au moins un ensemble de fixation flexible (1) est un sélectionné dans le groupe constitué de l'ensemble de fixation flexible (1) selon les revendications 1 à 8, dans lequel le corps de chaise de matériau en mousse (80) inclut au moins un concave courbé (801) pour disposer l'ensemble de fixation flexible (1).

10. Coussin (3) selon la revendication 9, dans lequel le corps de chaise de matériau en mousse (80) couvre le corps mince flexible (40) situé entre les unités de fixation (2).
